## Europäisches Patentamt
## European Patent Office
## Office européen des brevets

(11) Veröffentlichungsnummer: **0 086 437**
A2

(12) **EUROPÄISCHE PATENTANMELDUNG**

(21) Anmeldenummer: 83101160.6

(22) Anmeldetag: 07.02.83

(51) Int. Cl.³: **B 01 D 41/02**, B 01 J 20/34

(30) Priorität: 16.02.82 DE 3205377

(43) Veröffentlichungstag der Anmeldung: 24.08.83
Patentblatt 83/34

(84) Benannte Vertragsstaaten: **AT BE CH DE FR IT LI NL SE**

(71) Anmelder: **Linde Aktiengesellschaft, Abraham-Lincoln-Strasse 21, D-6200 Wiesbaden (DE)**

(72) Erfinder: **Fuchs, Uwe, Chem.-Ing., Heiterwanger Strasse 46, D-8000 München 70 (DE)**

(74) Vertreter: **Schaefer, Gerhard, Dr., Linde Aktiengesellschaft Zentrale Patentabteilung, D-8023 Höllriegelskreuth (DE)**

(54) Verfahren und Vorrichtung zur Kompressionsregenerierung flexibler poröser Materialien.

(57) Die Erfindung betrifft ein Verfahren und eine Vorrichtung zur Kompressionsregenerierung flexibler, als Filter-, Ölabscheide- und/oder Trägerteilchen dienender poröser Materialien, die in einem Reaktor mit aus Flüssigkeiten, wie Wasser, zu entfernenden Substanzen, wie insbesondere abgeschiedenen Feststoffen, Öltröpfchen und/oder Bakterien beladen und nach der Beladung einem Preßraum mit Preßeinrichtung zugeführt werden. Das Fördern, Auspressen und Abtrennen des Wassers von den Verunreinigungen sowie Rückführen des regenerierten Materials in den Reaktor wird durch ein- oder mehrmaliges hin- und herbewegen der Preßeinrichtung mit einer einzigen Vorrichtung erreicht, wobei diese gleichzeitig als Presse und als Förderaggregat arbeitet.

## Verfahren und Vorrichtung zur Kompressions-
## regenerierung flexibler poröser Materialien

Die Erfindung betrifft ein Verfahren und eine Vorrichtung zur Kompressionsregenerierung flexibler, als Filter-, Ölabscheide- und/oder Trägerteilchen dienender, poröser Materialien, die in einem Reaktor mit aus Flüssigkeiten, wie Wasser, zu entfernenden Substanzen, wie insbesondere abgeschiedenen Feststoffen, Öltröpfchen und/oder Bakterien, beladen und nach der Beladung einem eine Preßeinrichtung aufweisenden Preßraum zugeführt werden.

Auf dem Gebiet der Flüssigkeits- und Abwasserbehandlung stellt die Filtration seit langem eines der Hauptverfahren zur Beseitigung von Schwebstoffen aus Flüssigkeitsströmen dar. Als besonders geeignete Filtermedien haben sich neuerdings flexible, poröse Materialien erwiesen, wie offenzellige, poröse Körper auf Kunststoffpolymerbasis und insbesondere Schaumstoffe (Biological Fluidised Bed Treatment of Water and Wastewater, 1981, Seiten 272 bis 283). Insbesondere hat sich Polyurethanschaum durch vielfache betriebstechnische Vorteile ausgezeichnet, so unter anderem durch eine hohe Feststoffaufnahmefähigkeit, niedrige Druckabfallverluste, große Widerstandsfähigkeit gegenüber Verstopfung und Beseitigung von zahlreichen, ungelösten organischen Schmutzstoffen aus einem Flüssigkeitsstrom.

Polyurethanschaum wird jedoch nicht nur als Filtermaterial bei der (Ab-)Wasserfiltration eingesetzt, sondern wird auch als Trägermaterial für Bakterien, die zur Aktivierung von Prozessen benötigt werden, die während der Abwasserbehandlung ablaufen, und als koalisierendes Medium bei der Entfernung von ungelösten flüssigen Kohlenwasserstoffen aus Prozeß-und Abwässern und in der Fermentertechnik verwendet.

Da sich die Polyurethanteilchen im Laufe der Zeit beladen, sind Regenerierverfahren erforderlich. Dabei sollen die in den Poren haftenden Substanzen, wie abgeschiedene Feststoffe, Öltröpfchen oder Bakterien, möglichst vollständig aus diesen entfernt und vom Material sowie vom anhaftenden Wasser abgetrennt werden. Das regenerierte Material muß anschließend dem Reaktor wieder zugeführt werden, und zwar bei einem Gleichstromreaktor am Kopf und bei einem Gegenstromreaktor im unteren Bereich. Für den Transport der Polyurethanteilchen sind somit aufwendige zusätzliche Fördereinrichtungen, wie Mammutpumpen, Förderschnecken, Förderbänder und andere Aggregate erforderlich.

Aufgabe der vorliegenden Erfindung ist es daher, ein Verfahren und eine Vorrichtung zur Kompressionsregenerierung dahingehend zu verbessern, daß die zusätzlichen Fördereinrichtungen entfallen und die Regenerierung sich somit wirtschaftlicher gestaltet.

Diese Aufgabe wird erfindungsgemäß dadurch gelöst, daß das mit den zu entfernenden Substanzen beladene Material zusammen mit dem Wasser durch Rückwärtsbewegung der Preßeinrichtung aus dem Reaktor in den Preßraum angesaugt wird, daß dort durch Vorwärtsbewegung der Preßeinrichtung das Wasser und die zu entfernenden Substanzen aus dem Material ausgepreßt werden, daß durch erneute Rückwärtsbewegung der Preßeinrichtung Förderwasser angesaugt wird und daß durch nochmalige Vorwärtsbewegung der Preßeinrichtung das regenerierte Material in den Reaktor zurückgepreßt wird. Das zu regenerierende Material wird zusammen mit der Flüssigkeit, die in den meisten Fällen Wasser ist, infolge der durch die Rückwärtsbewegung der Preßeinrichtung bewirkten Saugkraft aus dem Reaktor in den Preßraum befördert. Dort wird das Material durch Vorwärtsbewegung der Preßeinrichtung zusammengedrückt, wobei anfänglich nur das im Material anhaftende Wasser ausgepreßt und abgeleitet wird und erst durch weiteres Zusammenpressen auch die zu entfernenden Substanzen aus den Poren des beladenen Material herausgedrückt werden, so daß das Wasser und die zu entfernenden Substanzen bereits getrennt voneinander aus dem Material entfernt werden und ein konzentriertes Regenerat erhalten wird. Durch anschließende Rückwärtsbewegung der Preßeinrichtung wird durch die dabei auftretende Saugwirkung Förderwasser entweder aus dem Reaktor oder aus einer Frischwasserquelle angesaugt, so daß die zusammengedrückten Materialteilchen wieder entspannt und im Wasser verteilt werden, wodurch sie leicht bei entsprechender Stellung der Absperrorgane durch Vorwärtsbewegung der Preßeinrichtung zurück in den Reaktor gefördert werden können.

Das Fördern, Auspressen, Abtrennen des Wassers von den Verunreinigungen und Rückführen des regenerierten Materials in den Reaktor wird demnach erfindungsgemäß mit einer einzigen Vorrichtung bewältigt, wobei diese gleichzeitig als Presse und als Förderaggregat arbeitet. Das erfindungsgemäß Verfahren ermöglicht somit den Wegfall der bisher üblichen und notwendigen Fördereinrichtungen, woraus sich eine erhebliche Kostenersparung ergibt. Die Erfindung bietet desweiteren den Vorteil, daß dieselbe Regerieranlage sowohl bei Gegenstrom- als auch bei Gleichstromreaktoren eingesetzt werden kann. Durch Automatisierung der Regenerierschritte ist überdies ein kontinuierliches Regenerieren möglich.

In Weiterbildung des Erfindungsgedankens ist vorgesehen, daß nach Füllen des Preßraums durch teilweise Vorwärtsbewegung der Preßeinrichtung das Wasser aus dem beladenen Material ausgepreßt wird, durch teilweise anschließende Rückwärtsbewegung der Preßeinrichtung Wasser zum Freispülen des Materials entweder aus dem Reaktor oder einer Frischwasserquelle angesaugt wird und daß durch Vorwärtsbewegung der Preßeinrichtung das Wasser und die zu entfernenden Substanzen aus dem Material ausgepreßt werden. Diese Arbeitsweise erlaubt, insbesondere bei mehrmaliger Wiederholung des Zusammenpressens und Entspannens unter gleichzeitigem Ansaugen von Spülwasser, eine Feinreinigung des beladenen Materials. Vorteilhaft wird dabei das Spülwasser, insbesondere bei Verwendung von Frischwasser, in den Raum hinter der Preßeinrichtung gedrückt, so daß kein zusätzlicher Speicherraum für Spülwasser benötigt wird.

Zum Auspressen des Wassers und der zu entfernenden Substanzen hat es sich als günstig erwiesen, wenn das beladene Material auf ca. 20 bis 5 % seines entspannten Volumens ausgedrückt wird.

Nach einer weiteren bevorzugten Ausgestaltung des erfindungsgemäßen Verfahrens ist vorgesehen, daß während des Zurückpressens des im Förderwasser verteilten regenerierten Materials in den Reaktor Druckluft in das Förderwasser eingeblasen wird. Auf diese Weise wird sichergestellt, daß die Materialteilchen aufgelockert und besser im Wasser verteilt werden, wodurch wiederum das Rückführen in den Reaktor erleichtert wird.

0086437

Die Erfindung betrifft außerdem eine Vorrichtung zur Durchführung des Verfahrens mit einem Reaktor und einem eine Preßeinrichtung aufweisenden Preßraum, die dadurch gekennzeichnet ist, daß der Preßraum über jeweils eine Materialtransportleitung mit je einem Absperrorgan mit dem oberen und dem unteren Teil des Reaktors verbunden ist, daß an den Preßraum eine absperrbare Ablaufleitung für das Wasser und die zu entfernenden Substanzen mit Rückhalteeinrichtung für das zu regenerierende Material und ein absperrbarer Zulauf für das Förderwasser angeschlossen sind.

Bevorzugt mündet dabei der Zulauf für das Förderwasser in den Ablauf für das Wasser und die zu entfernenden Substanzen, wobei der Zulauf für das Förderwasser vorteilhaft mit dem Ablauf des Reaktors verbunden ist. Gemäß einer weiteren Ausführungsform der erfindungsgemäßen Vorrichtung ist vorgesehen, daß an den Zulauf für das Förderwasser eine Druckluftleitung angeschlossen ist.

Die Preßeinrichtung ist gemäß der Erfindung mit Vorzug als Preßstempel ausgebildet, doch kann sie alternativ auch als Membranpumpenpresse ausgebildet sein, wobei die Hubgeschwindigkeit jeweils in dem bevorzugten Bereich von 0,01 bis 0,5 m/sec liegen sollte.

Die Rückhalteeinrichtung für das zu regenerierende Material ist bevorzugt als Siebboden ausgebildet und weist ein bis fünf Löcher pro 10 cm² mit je nach Trägerpartielgröße 2 bis 10 mm Durchmesser auf. Auf diese Weise wird gewährleistet, daß das Material, das bevorzugt in zerkleinerter Form vorliegt, nicht zusammen mit dem Wasser und den zu entfernenden Substanzen aus der Regenerieranlage ausgetragen wird.

Um einer Verlegung der Materialstransportleitungen mit beladenen oder regenerierten Materialteilchen vorzubeugen, sollte ein Durchmesser von 10 cm nicht unterschritten werden. Vorzugsweise sollten diese Leitungen einen Durchmesser von 10 bis 30 cm haben.

Das erfindungsgemäße Verfahren und die Vorrichtung zur Durchführung dieses Verfahrens eignen sich zur Regenerierung aller Arten flexibler, poröser Filter-, Ölabscheide- und/oder Trägermaterialien, wie insbesondere Polyurethanschaum und offenzelliger, poröser Körper auf Polyäthylen-, Polypropylen- und Silikonbasis. Das Verfahren läßt sich auch als Ernteverfahren in der Fermentertechnik einsetzen, wo ebenfalls eine Anwendung von Schaumstoff als Filter- oder Trägermaterial möglich ist.

Die Erfindung sei im folgenden anhand der in den Figuren schematisch dargestellten Ausführungsbeispiele näher erläutert. Es zeigen:

Figur 1 eine Regenerierapparatur, insbesondere für Gleich- und Gegenstromreaktoren, nach dem Stempelprinzip mit horizontaler Pressung,

Figur 2 wie vor mit vertikaler Pressung,

Figur 3 eine Regenerierapparatur zur Feinregenerierung nach dem Stempelprinzip mit vertikaler Pressung,

Figur 4 eine Spülwasser-Rückführung,

Figur 5 einen speziellen Kegelstempel in Seiten- und Draufsicht,

Figur 6 eine Regenerierapparatur, insbesondere für Gleich- und Gegenstromreaktoren, nach dem Membranpumpen-Prinzip.

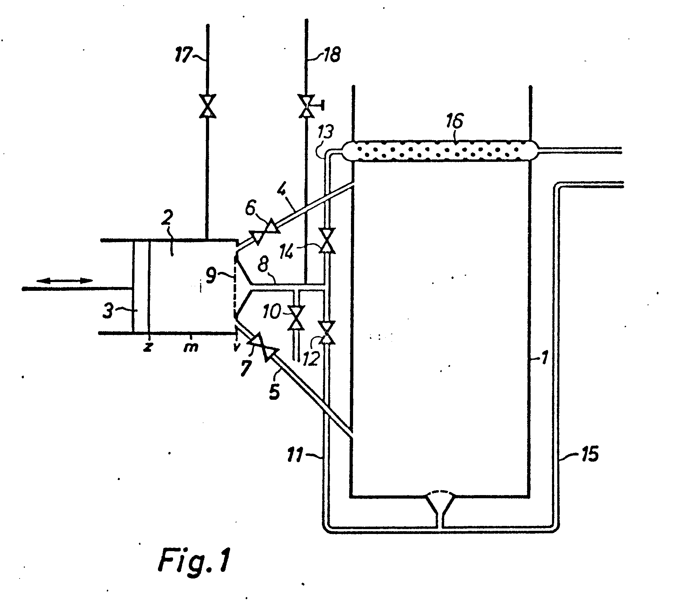

Die in Figur 1 dargestellte Regenerierapparatur besteht aus einem Reaktor 1, der sowohl in Gleichstrom als auch im Gegenstrom betrieben werden kann, aus einem Preßraum 2 mit

0086437

Preßstempel 3, Materialtransportleitungen 4 und 5 mit Absperrorganen 6 und 7, eine Ablaufleitung 8 mit Siebboden 9 und Ventil 10 sowie einem Zulauf 11 mit Ventil 12 für Gegenstrombetrieb bzw. Zulauf 13 mit Ventil 14 für Gleichstrombetrieb. Der Zulauf ist dabei mit dem Ablauf 15 für Gegenstrombetrieb bzw. 16 für Gleichstrombetrieb des Reaktors angeschlossen. Dabei ist unter Gleichstrombetrieb zu verstehen, daß die Luft und das zulaufende, zu reinigende Wasser von unten in den Reaktor geleitet werden, während bei Gegenstrombetrieb das Wasser von oben und die Luft von unten in den Reaktor eingeführt werden.

Das erfindungsgemäße Verfahren soll nunmehr für einen Gegenstromreaktor ausführlich erklärt werden. Flexibles, poröses Material, das als Filter-, Ölabscheide- und/oder Trägermaterial dient, befindet sich im Reaktor 1 und wird mit Substanzen, wie insbesondere abgeschiedenen Feststoffen, Öltröpfchen und/oder Bakterien, die sich in der von oben zulaufenden Flüssigkeit, meist Wasser, befinden und aus dieser entfernt werden soll (wozu für den biologischen Stoffumsatz und/oder zur besseren Durchmischung von unten Luft in den Reaktor eingeblasen wird) beladen, wonach das beladene Material von Zeit zu Zeit oder kontinuierlich regeneriert werden muß. Dazu wird bei sonst geschlossenen Ventilen und Absperrorganen die Ventilklappe 6 geöffnet und der Stempel 3 von der vorderen Position v in die hintere Position z bewegt (Rückwärtsbewegung), so daß infolge der Saugkraft die beladenen Materialteilchen, wie z.B. Polyurethanschaumteilchen, zusammen mit Wasser in den Preßraum 2 befördert werden. Daraufhin wird die Ventilklappe 6 geschlossen und Ventil 14 geöffnet, während gleichzeitig der Stempel 3 von der hinteren in die mittlere Position (von z nach m) bewegt wird. Dabei wird das mitgeführte Wasser ausgepreßt und über Leitung 13 dem zulaufenden, zu reinigenden Abwasser in den Gegenstromreaktor 1 beigemischt. Dann wird Ventil 14 wieder geschlossen.

Zum Nachfüllen des Preßraums kann nochmals Ventilklappe 6 geöffnet, der Stempel 3 von der mittleren in die hintere Position bewegt und dadurch weiteres, beladenes Material und Wasser aus dem Reaktor angesaugt werden. Sodann wird Ventilklappe 6 geschlossen. Ventil 14 geöffnet, der Stempel 3 aus der hinteren in die mittlere Position bewegt,dadurch das Wasser entfernt und über Leitung 13 dem Zulauf des Reaktors 1 zugeführt, Ventil 14 geschlossen, Ventil 10 geöffnet und der Stempel von der mittleren in die vordere Position bewegt, also das beladene Material ausgepreßt (vorteilhaft auf 20 bis 5% seines entspannten Volumens). Dabei werden die zu entfernenden Substanzen aus den Materialteilchen ausgepreßt über Leitung 8 entfernt. Der Siebboden 9 verhindert dabei, daß die Materialteilchen ausgetragen werden. Handelt es sich bei diesen Substanzen beispielsweise um abgeschiedene Feststoffe, werden diese als Überschußschlamm z.B. einem Eindicker zugeführt. Bei anderen Substanzen werden diese ihren Eigenschaften entsprechend weiter eingesetzt.

Nachdem die zu entfernenden Substanzen aus dem beladenen Material ausgepreßt sind, wird Ventil 10 geschlossen und Ventil 12 geöffnet, so daß über Leitung 11, die an den Ablauf 15 des Gegenstromreaktors angeschlossen ist, Förderwasser durch Rückwärtsbewegung des Stempels (von k nach z) in den Preßraum angesaugt wird. Alternativ kann über eine direkt in den Preßraum führende Versorgungsleitung 17 auch Frischwasser angesaugt werden. Die nunmehr regenerierten Materialteilchen entspannen sich dadurch und werden gleichzeitig in dem einfließenden Wasser verteilt. Um dies noch zu unterstützen, kann über eine Druckluftleitung 18, die in die Leitung 8 führt, Druckluft eingeblasen werden, die über ein Einführungsventil 19 entweicht. Sobald der Preßraum mit Förderwasser angefüllt ist, wird Ventil 12 geschlossen, die Ventilklappe 7 geöffnet und der Stempel von der hinteren in die vordere Position bewegt, so daß die im Förderwasser verteilten regenerierten Materialteilchen zusammen mit dem Förderwasser durch die Transportleitung 5 in den unteren Teil des Reaktors 1 zurückgeführt werden.

Bei dieser Verfahrensweise hat es sich als günstig erwiesen, wenn der Stempel mit einer Geschwindigkeit von ca. 0,01 bis 0,5 m/sec bewegt wird, wobei der Antrieb mechanisch (z.B. Spindel oder Zahnstange) oder hydraulisch erfolgen kann. Ferner sollte der Preßraum so dimensioniert sein, daß das Hubraumlängen- : Hubraumdurchmesserverhältnis nicht größer als 3 : 1 ist.

Um ein Verstopfen der Absperrorgane, d.h. beispielsweise der Ventilklappen 6 und 7, zu verhindern, sollten diese beim Öffnen und Schließen möglichst schnell ansprechen und einen großen Querschnitt aufweisen. Durch zusätzliches kurzzeitiges Einspeisen von Luft oder Ablaufwasser können die Absperrorgane für den Schließ- bzw. Öffnungevorgang freigespült werden. Nützlich ist es außerdem, wenn die Materialtransportleitungen 4 und 5 möglichst kurz ausgelegt sind, damit auch hier einer Verlegung mit Materialteilchen vorgebeugt werden kann. Ein Durchmesser der Transportleitungen von mindestens 10 cm, bevorzugt von 10 bis 30 cm, ist dabei ebenfalls günstig.

In der Tabelle I sind die Regenerierschritte nochmals mit entsprechender Ventil- und Stempelstellung sowohl für Gegenstrom-als auch für Gleichstromreaktoren zusammengestellt. Dabei ist zu beachten, daß sich der Ablauf 16 bei Gleichstromführung im oberen Teil des Reaktors befindet.

## Tabelle I

| Schritt | Vorgang | Stempel-bewegung | Gegenstrom Ventilstlg. | Gleichstrom Ventilstlg. |
|---|---|---|---|---|
| 1 | Füllen des Preßraumes | v → z | 6*,7,10,14,12 | 6,7*,10,14,12 |
| 2 | Wasser entfernen | z → m | 6,7,10,14*,12 | 6,7,10,14,12* |
| 3 | Nachfüllen | m → z | 6*,7,10,14,12 | 6,7*,10,14,12 |
| 4 | Wasser entfernen | z → m | 6,7,10,14*,12 | 6,7,10,14,12* |
| 5 | Auspressen der zu ent-fernenden Substanzen | m → v | 6,7, 10*,14,12 | 6,7,10*,14,12 |
| 6 | Förderwasser ansaugen | v → z | 6,7,10,14,12* | 6,7,10,14*,12 |
| 7 | Materialteilchen rück-führen | z → v | 6,7 *,10,14,12 | 6*,7,10,14,12 |

Die mit * bezeichneten Ventile sind geöffnet, während die anderen Ventile geschlossen sind.

  z = Stempel in hinterer Position

  m = Stempel in mittlerer Position

  v = Stempel in vorderer Position

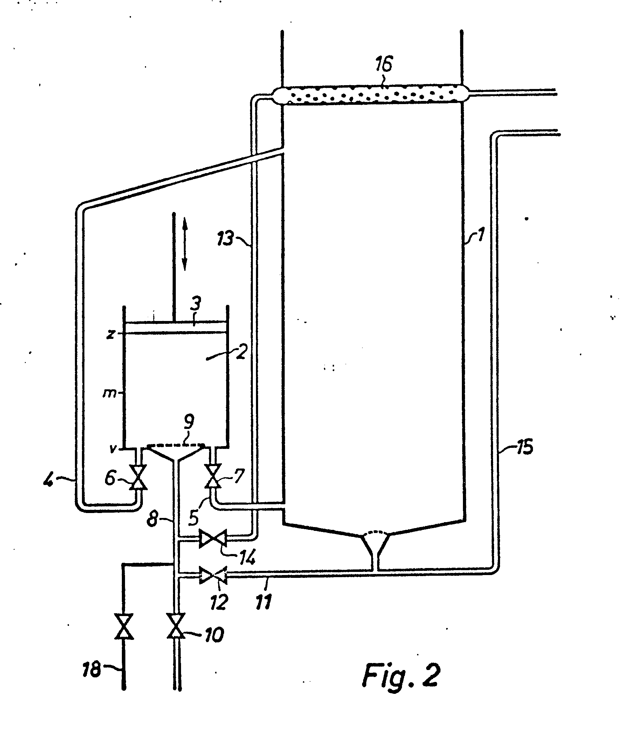

Die in Figur 2 dargestellte Regenerierapparatur stimmt mit
der vorbeschriebenen Apparatur der Figur 1 überein, mit
dem einzigen Unterschied, daß eine vertikale Pressung durchgeführt wird. Es gilt die in Tabelle I aufgezeigte Schrittfolge.

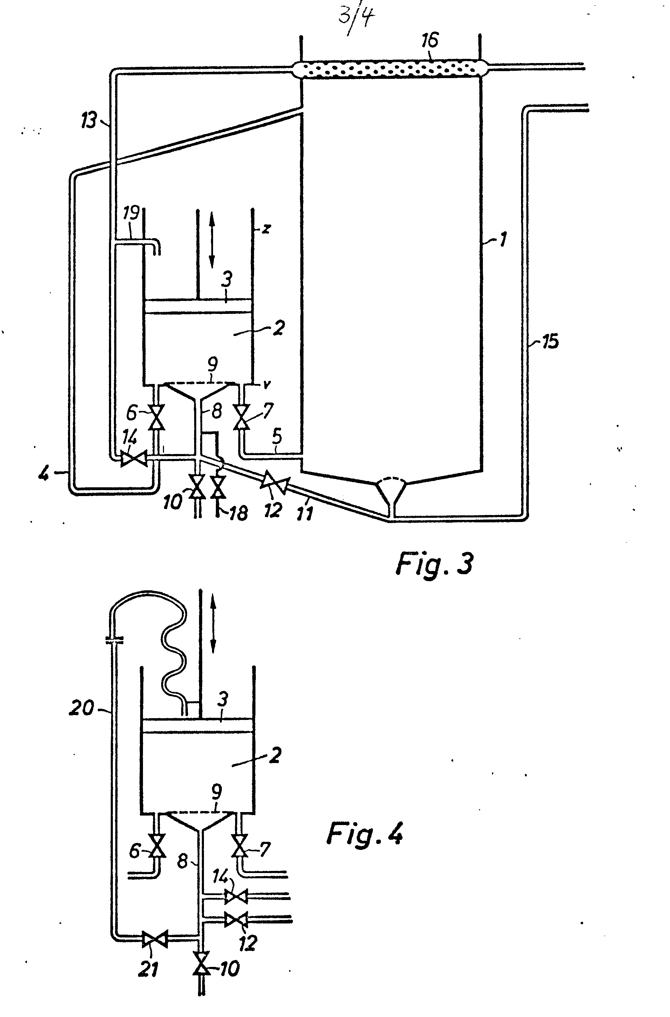

Die schematisch dargestellte Vorrichtung gemäß Figur 3
entspricht ebenfalls weitestgehend der Regenerierapparatur
nach Figur 1, dient jedoch zur Feinregenerierung und weist
zu diesem Zwecke eine Stichleitung 20 von Leitung 13 auf,
die in den hinteren Preßraum führt, und über die durch
Hin- und Herbewegung des Preßstempels, Wasser zum Freispülen
der Materialteilchen von dem Preßraum zum hinteren Preßraum hin
hin- und hergeleitet wird. Ein weiterer Unterschied zur Vorrichtung gemäß Figur 1 besteht
darin, daß der Stempel nur in eine vordere und in eine hintere Position bewegt werden kann. Eine Vorrichtung zur Feinregenerierung mit Horizontalpressung ist dabei ebenso denkbar, jedoch nicht gesondert dargestellt. In Tabelle II sind die Regenerierschritte für die Feinregenerierung zusammengestellt.

Tabelle II

| Schritt | Vorgang | Stempel-bewegung | Gegenstrom-Ventil-stellung | Gleichstrom-Ventil-stellung |
|---|---|---|---|---|
| 1 | Füllen d. Preßraums | v → z | 6*,7,10,14,12 | 6,7*,10,14,12 |
| 2 | Freispülen der Materialteilchen | v ↔ z | 6,7,10,14*,12 | 6,7,10,14,12* |
| 3 | Auspressen der zu entfernenden Substanzen | z → v | 6,7,10*,14,12 | 6,7,10*,14,12 |
| 4 | Förderwasser ansaugen | v → z | 6,7,10,14,12* | 6,7,10,14*,12 |
| 5 | Materialteilchen rückführen | z → v | 6,7*,10,14,12 | 6*,7,10,14,12 |

Die mit * bezeichneten Ventile sind geöffnet, während die anderen Ventile geschlossen sind.

z = Stempel in hinterer Position
v = Stempel in vorderer Position

In Figur 4 ist ein Teilausschnitt einer Regenerierapparatur gezeigt, nämlich die Rückführung des ausgepreßten Wassers. Dieses wird dabei nicht dem Ablauf des Reaktors beigemischt, sondern über eine Leitung 21, die teilweise als flexibler Schlauch ausgebildet sein kann, mit Ventil 22 direkt, wie beispielsweise bei der Feinregenerierung bereits erläutert wurde, in den Preßraum aufgegeben.

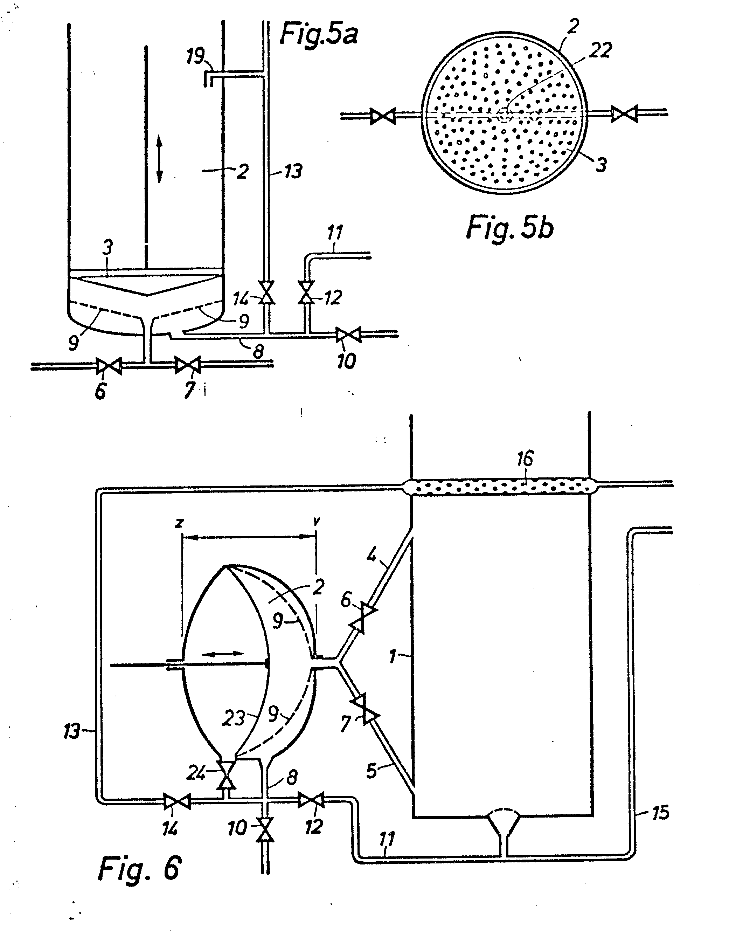

Figur 5 zeigt in der Seitenansicht eine spezielle Stempelausführung, nämlich einen Kegelstempel, der den Vorteil mit
sich bringt, daß dadurch eine größere Preßfläche erreicht wird
und nur eine Öffnung für den Ein- und Austrag erforderlich
ist. In diesem Fall münden die beiden Materialtransportleitungen in einer gemeinsamen Leitung in den unteren Teil des
Preßraums 2, während die Leitung zum Abführen der zu entfernenden Substanzen seitlich aus dem unteren Teil des Preßraums
herausführt. Wie aus der Draufsicht hervorgeht, ist der Kegelstempel bis auf die der Austrittsöffnung 23 entsprechenden
Fläche als Siebfläche ausgebildet.

Figur 6 schließlich zeigt eine Regenerierapparatur, insbesondere für Gleich- und Gegenstromreaktoren, nach dem
Membranpumpenprinzip. Im Unterschied zur Regenerierapparatur
nach dem Stempelprinzip, beispielsweise gemäß Figur 1, erfolgt
die Pressung im vorliegenden Fall mittels einer Preßmembran
24, die mechanisch oder hydraulisch zwischen einer hinteren
und einer vorderen Stellung hin- und herbewegt wird. Der
Preßraum ist hierbei über ein weiteres Ventil 25 mit Leitung
13 verbunden, so daß ähnlich wie in Figur 3 und 4 der hintere
Preßraum gleichzeitig auch als Speicherraum genutzt wird.

Die Regenerierschritte bei der Verwendung einer Preßmembran
sind in Tabelle III zusammengestellt.

- 13 -

## Tabelle III

| Schritt | Vorgang | Membran-bewegung | Gegenstrom Ventilstlg. | Gleichstrom Ventilstlg. |
|---|---|---|---|---|
| 1 | Füllen d. Preßraums | v → z | 6*,7,10,14,12,25 | 6,7*,10,14,12,25 |
| 2 | Freispülen der Materialteilchen | z ↔ v | 6,7,10,14,12,25* | 6,7,10,14,12,25* |
| 3 | Auspressen der zu entfernenden Substanzen | z → v | 6,7,10*,14,12,25 | 6,7,10*,14,12,25 |
| 4 | Förderwasser ansaugen | v → z | 6,7,10,14,12*,25 | 6,7,10,14*,12,25 |
| 5 | Materialteilchen rückführen | z → v | 6,7*,10,14,12,25 | 6*,7,10,14,12,25 |

Die mit * bezeichneten Ventile sind geöffnet, während die anderen Ventile geschlossen sind,

z = Membranstellung in hinterer Position

v = Membranstellung in vorderer Position

Form. 5729 7.78

Patentansprüche

1. Verfahren zur Kompressionsregenerierung flexibler, als Filter-, Ölabscheide- und/oder Trägerteilchen dienender poröser Materialien, die in einem Reaktor mit aus Flüssigkeiten, wie Wasser, zu entfernenden Substanzen, wie insbesondere abgeschiedenen Feststoffen, Öltröpfchen und/oder Bakterien beladen und nach der Beladung einem eine Preßeinrichtung aufweisenden Preßraum zugeführt werden, dadurch gekennzeichnet, daß das mit den zu entfernenden Substanzen beladene Material zusammen mit dem Wasser durch Rückwärtsbewegung der Preßeinrichtung aus dem Reaktor in den Preßraum angesaugt wird, daß dort durch Vorwärtsbewegung der Preßeinrichtung das Wasser und die zu entfernenden Substanzen aus dem Material ausgepreßt werden, daß durch erneute Rückwärtsbewegung der Preßeinrichtung Förderwasser angesaugt wird und daß durch nochmalige Vorwärtsbewegung der Preßeinrichtung das regenerierte Material in den Reaktor zurückgepreßt wird.

2. Verfahren nach Anspruch 1, dadurch gekennzeichnet, daß nach Füllen des Preßraums durch eine oder mehrere teilweise Vorwärtsbewegungen der Preßeinrichtung das Wasser aus dem beladenen Material ausgepreßt wird, durch eine oder mehrere teilweise anschließende Rückwärtsbewegungen der Preßeinrichtung Wasser zum Freispülen des Materials angesaugt wird und daß durch Vorwärtsbewegung der Preßeinrichtung das Wasser und die zu entfernenden Substanzen aus dem Material ausgepreßt werden.

3. Verfahren nach Anspruch 2, dadurch gekennzeichnet, daß als Spülwasser Abwasser aus dem Reaktor angesaugt wird.

4. Verfahren nach Anspruch 2, dadurch gekennzeichnet, daß als Spülwasser Frischwasser angesaugt wird.

5. Verfahren nach Anspruch 3 oder 4, dadurch gekennzeichnet, daß Spülwasser in den Preßraum hinter der Preßeinrichtung eingeleitet wird.

6. Verfahren nach einem der Ansprüche 1 bis 5, dadurch gekennzeichnet, daß als Förderwasser Abwasser aus dem Reaktor angesaugt wird.

7. Verfahren nach einem der Ansprüche 1 bis 5, dadurch gekennzeichnet, daß als Förderwasser Frischwasser angesaugt wird.

8. Verfahren nach einem der Ansprüche 1 bis 7, dadurch gekennzeichnet, daß das Material auf 20 bis 5 % seines entspannten Volumens zusammengepreßt wird.

9. Verfahren nach einem der Ansprüche 1 bis 8, dadurch gekennzeichnet, daß die zu entfernenden Substanzen durch mehrmaliges Zusammenpressen und Entspannen unter gleichzeitigem Ansaugen von Spülwasser aus dem beladenen Material entfernt werden.

0086437

10. Verfahren nach einem der Ansprüche 1 bis 9, dadurch gekennzeichnet, daß während des Zurückpressens des im Förderwasser verteilten regenerierten Materials in den Reaktor Druckluft in das Förderwasser eingeblasen wird.

11. Verfahren nach einem der Ansprüche 1 bis 10, dadurch gekennzeichnet, daß die Hubgeschwindigkeit der Preßeinrichtung 0,01 bis 0,5 m/sec beträgt.

12. Vorrichtung zur Durchführung des Verfahrens nach einem der Ansprüche 1 bis 11 mit einem Reaktor und einem eine Preßeinrichtung aufweisenden Preßraum, dadurch gekennzeichnet, daß der Preßraum (2) über jeweils eine Materialtransportleitung (4,5) mit je einem Absperrorgan (6,7) mit dem oberen und dem unteren Teil des Reaktors (1) verbunden ist, daß an dem Preßraum (2) eine absperrbare Ablaufleitung (8) für das Wasser und die zu entfernenden Substanzen mit Rückhalteeinrichtung (9) für das zu regenerierende Material und ein absperrbarer Zulauf (11,13) für das Förderwasser angeschlossen sind.

13. Vorrichtung nach Anspruch 12, dadurch gekennzeichnet, daß der Zulauf (13) für das Förderwasser in den Ablauf (8) für das Wasser und die zu entfernenden Substanzen mündet.

14. Vorrichtung nach Anspruch 12 oder 13, dadurch gekennzeichnet, daß der Zulauf (11,13) für das Förderwasser mit dem Ablauf (15,16) des Reaktors verbunden ist.

15. Vorrichtung nach einem der Ansprüche 12 bis 14, dadurch gekennzeichnet, daß an den Zulauf (11,13) für das Förderwasser eine Druckluftleitung (18) angeschlossen ist.

16. Vorrichtung nach einem der Ansprüche 12 bis 15, dadurch gekennzeichnet, daß an den Preßraum (2) eine Zuleitung (17) für das Frischwasser angeschlossen ist.

17. Vorrichtung nach Anspruch 12, dadurch gekennzeichnet, daß die Preßeinrichtung als Preßstempel (3) ausgebildet ist.

18. Vorrichtung nach Anspruch 12, dadurch gekennzeichnet, daß die Preßeinrichtung als Membranpumpenpresse (23) ausgebildet ist.

19. Vorrichtung nach Anspruch 12, dadurch gekennzeichnet, daß die Rückhalteeinrichtung für das zu regenerierende Material als Siebboden (9) ausgebildet ist.

20. Vorrichtung nach Anspruch 19, dadurch gekennzeichnet, daß der Siebboden ein bis fünf Löcher pro 10 cm² mit 2 bis 10 mm Durchmesser aufweist.

21. Vorrichtung nach Anspruch 12, dadurch gekennzeichnet, daß die Materialtransportleitungen (4,5) einen Durchmesser von mindestens 10 cm, bevorzugt von 10 bis 30 cm besitzen.

Fig.1

Fig. 2

0086437

Fig. 3

Fig. 4

0086437

4/4

Fig.5a

Fig. 5b

Fig. 6